(19) Europäisches Patentamt

European Patent Office

Office européen des brevets

(11) Veröffentlichungsnummer: **0 422 457 A1**

# (12) EUROPÄISCHE PATENTANMELDUNG

(21) Anmeldenummer: **90118630.4**

(22) Anmeldetag: **28.09.90**

(51) Int. Cl.⁵: **B60T 8/32**

(30) Priorität: **10.10.89 DE 3933797**

(43) Veröffentlichungstag der Anmeldung:
**17.04.91 Patentblatt 91/16**

(84) Benannte Vertragsstaaten:
**DE FR GB IT SE**

(71) Anmelder: **ROBERT BOSCH GmbH**
**Postfach 10 60 50**
**W-7000 Stuttgart 10(DE)**

(72) Erfinder: **Willmann, Karl-Heinz, Dipl.-Ing.**
**Arndtstrasse 45**
**W-7149 Freiberg/N.(DE)**

(54) **Bremsanlage.**

㊛ Bei einer Bremsanlage mit einem Hauptbremszylinder (1), in dem zumindest ein von einer Kolbenstange (12) mit Bremsdruck beaufschlagbarer Bremskolben (3) eine Bremskammer (5) ausbildet, aus welcher eine Bremsleitung (29) zu Radbremszylindern führt, ist in die Bremsleitung zumindest ein Ventil (30) zum Sperren der Bremsleitung bei einer Antiblockierregeleung eingeschaltet und mit der Bremsleitung zumindest eine von einem Zusatzkolben (24) gebildete Druckkammer (26) eines Zusatzplungers (22) zum Einspeisen von Bremsflüssigkeit über eine Leitung (29) verbunden. Dabei führt von der Bremsleitung (15b) vor dem Ventil eine Rückführleitung (33) für die Bremsflüssigkeit bei einer Antiblockierregelung zu der Druckkammer (26) des Zusatzplungers (22). In die Rückführleitung (33) ist ein Ventil (34), insbesondere ein 2/2-Wegeventil, eingeschaltet.

Fig. 1

# BREMSANLAGE

## Stand der Technik

Die Erfindung betrifft eine Bremsanlage entsprechend dem Oberbegriff von Anspruch 1.

Eine derartige Bremsanlage, bei der die Bremskraftverstärkung allein oder zusätzlich außerhalb des eigentlichen Hauptbremszylinders stattfindet, ist beispielsweise in der US-PS 4 678 243 beschrieben. Dort ist in einen Bremskreis ein Zusatzplunger eingeschaltet, über welchen ein zusätzlicher Bremsdruck auf Radbremszylinder ausgeübt werden kann. Hierbei erfolgt der Druckaufbau in dem Zusatzplunger unabhängig von einem Bremsdruck, der auf ein Bremspedal wirkt. Die Steuerung erfolgt über einen einem Kolben im Bremskraftverstärker zugeordneten Wegsensor und über einen dem Zusatzplunger zugeordneten Drucksensor. Somit hat dieser Zusatzplunger lediglich die Aufgabe, den Bremsdruck in dem Bremskreis unabhängig von dem auf das Bremspedal einwirkenden Bremsdruck zu erhöhen.

## Vorteile der Erfindung

Entsprechend der vorliegenden Erfindung wird jedoch nicht nur mittels des Zusatzplungers Bremsflüssigkeit in die Bremsleitung eingespeist, sondern der Zusatzplunger dient vor allem auch der Rückführung der Bremsflüssigkeit bei einer Antiblockierregelung. Aus diesem Grund ist die im Zusatzplunger durch den Zusatzkolben gebildete Druckkammer zusätzlich über eine Rückführleitung mit der Bremsleitung vor den die Antiblockierregelung bewirkenden Ventilen verbunden. Dieser Zusatzplunger nimmt im Falle der Antiblockierregelung einen Großteil des zurückzuführenden Bremsflüssigkeitsvolumens auf, so daß dieses unmittelbar einem nachfolgenden Bremsbetrieb wieder zur Verfügung steht.

In die Rückführleitung zwischen Druckkammer und Bremsleitung sollte ferner ein Ventil eingeschaltet sein. Hier bietet sich ein 2/2-Wegemagnetventil an, welches im Falle einer Antiblockierregelung von einer Schließstellung in eine geöffnete Stellung umspringt. Hierdurch wird der Weg für die Bremsflüssigkeit zurück in die Druckkammer des Zusatzplungers freigegeben.

In die Leitung zum Einspeisen von Bremsflüssigkeit aus der Druckkammer in die Bremsleitung soll ferner in einem Ausführungsbeispiel ein Rückschlagventil eingesetzt sein. Dieses Rückschlagventil hat dann lediglich die Aufgabe, bei einem hohen Bremsdruck in der Bremsleitung nicht noch zusätzlich eine Druckerhöhung durch den Zusatzplunger zuzulassen.

In einer bevorzugten Ausführungsform der Erfindung ist jedoch das Rückschlagventil durch ein umschaltbares Ventil, insbesondere ein 2/2-Wegemagnetventil ersetzt. Dieses Ventil kann einmal während der Halte- und Aufbauphase in der Antiblockierregelung die Aufgabe übernehmen, die Druckkammer des Zusatzplungers zur Bremskammer des Haupt bremszylinders hin zu öffnen, so daß ein Rückführen der Bremskolben im Hauptbremszylinder erfolgt. Ferner können diese Ventile in der Leitung zwischen Druckkammer des Zusatzplungers und Bremskammer auch eine Antriebsschlupfregelung übernehmen. Stellt beispielsweise ein Radsensor einen Antriebsschlupf eines Rades fest, so schaltet das entsprechende Ventil in Offenlage um, so daß unter Druck stehende Bremsflüssigkeit aus dem Druckraum des Zusatzplungers in die entsprechende Bremsleitung gelangt und von dort zu dem Radbremszylinder geführt wird.

In einer Ausführungsform der Erfindung erfolgt die Betätigung des Zusatzkolbens im Zusatzplunger, d. h. der Druckaufbau in der Druckkammer des Zusatzplungers, mechanisch über eine Stange od. dgl.. Beispielsweise ist daran gedacht, daß eine Zahnstange den Zusatzkolben stirnwärtig beaufschlagt, wobei die Zahnstange über ein elektromotorisch angetriebenes Zahnrad bewegt wird.

In einer weiteren Ausführungsform der Erfindung ist jedoch vor dem Zusatzkolben des Zusatzplungers ein Druckraum vorgesehen, in den über eine Speiseleitung mittels einer Pumpe Druckmedium einfüllbar ist. Hierbei ist in einer einfachen Ausführungsform der Erfindung daran gedacht, diese Pumpe von einer entsprechenden Steuereinheit nur dann zu betätigen, wenn tatsächlich ein Druckaufbau in der Druckkammer des Zusatzplungers benötigt wird.

In einer weiteren Ausführungsform der Erfindung ist jedoch in die Leitung zwischen Pumpe und Druckraum ein Ventil zum Speisen des Druckraumes und zwischen einem Vorratsbehälter und dem Druckraum ein Ventil zum Entlasten des Druckraumes eingeschaltet. Durch diese Anordnung ist es möglich, in einem dem Einspeiseventil vorgeschalteten Speicher durch die Pumpe einen Druck aufzubauen, welcher beim Umschalten des Einspeiseventils sofort zur Füllung des Druckraumes vor dem Zusatzkolben im Zusatzplunger benutzt werden kann. Selbstverständlich sollte bei dieser Anordnung auch ein entsprechendes Druckbegrenzungsventil zurück zum Vorratsbehälter führen, damit bei einer zu hohen Leistung der Pumpe der Speicher oder das Ventil keinen Schaden nimmt.

In einem weiterhin bevorzugten Ausführungsbeispiel der Erfindung erfolgt die Steuerung des Antriebes der Stange bzw. der Pumpe und der Ventile über eine Steuereinheit auf elektronischem Wege. Die Steuereinheit erhält Werte von Wegsensoren, welche einmal der Kolbenstange und zum anderen beispielsweise dem Zusatzkolben im Zusatzplunger zugeordnet sind. Die Steuereinheit kann die Werte beider Wegsensoren vergleichen und ein Nachführen des Zusatzkolbens durch Drukkaufbau im Druckraum vor dem Zusatzkolben ermöglichen.

In einem anderen Ausführungsbeispiel der Erfindung ist daran gedacht, den Zusatzkolben mechanisch über entsprechende Verbindungen mit der Kolbenstange zu koppeln, wobei eine Verschiebung der Kolbenstange ein Öffnen eines Ventils bewirkt, durch welches der Zusatzkolben infolge des Druckaufbaus im Druckraum nachgeführt wird. Ein entsprechendes Ventil dürfte zweckmäßigerweise ein 3/3-Wegeventil sein.

Bei den Ausführungsformen, in denen im Druckraum vor dem Zusatzkolben ein Druck mittels eines Druckmediums aufgebaut wird, bietet sich weiterhin an, daß dieser Druckraum über eine Ausgleichsleitung mit einem vor dem Bremskolben im Hauptbremszylinder gebildeten Druckraum in Verbindung steht. In diese Ausgleichsleitung ist ein Ventil eingeschaltet, über welches der Druckraum vor dem Bremskolben im Hauptbremszylinder ebenfalls mit Druckmedium füllbar ist. Hierdurch erübrigt sich ein zusätzlich zwischen Hauptbremszylinder und Bremspedal vorgesehener Bremskraftverstärker in jedem Fall. Auch die anderen Ausführungsbeispiele kommen ohne Bremskraftverstärkung im Bereich zwischen Hauptbremszylinder und Bremspedal aus, jedoch kann je nach Zweckmäßigkeit ein beispielsweise mit Vakuum angeordneter Bremskraftverstärker eine geringe Unterstützung bieten.

Ein weiterer Vorteil der vorliegenden Erfindung ist, daß der Durchmesser des Hauptbremszylinders außerordentlich gering ausgelegt ist. Sollte beispielsweise der Zusatzplunger versagen bzw. ausfallen, so ist dennoch ein hoher Bremsdruck bei relativ geringer Pedalkraft zu erreichen.

Zeichnungen

Weitere Vorteile der Erfindung werden anhand der Zeichnung näher erläutert. Diese zeigt in

Figur 1 eine teilweise im Längsschnitt und teilweise als Blockschaltbild dargestellte Bremsanlage;

Figur 2 eine teilweise im Längsschnitt und teilweise blockschaltbildlich dargestellte weitere Ausführungsform einer Bremsanlage entsprechend Figur 1;

Figur 3 eine teilweise im Längsschnitt und teilweise blockschaltbildlich dargestellte weitere Ausführungsform einer Bremsanlage;

Figur 4 einen Ausschnitt aus einer Bremsanlage entsprechend den Figuren 1 bis 4;

Figur 5 einen Ausschnitt aus einer Bremsanlage entsprechend den Figuren 1 bis 4 in einer weiteren Ausführungsform.

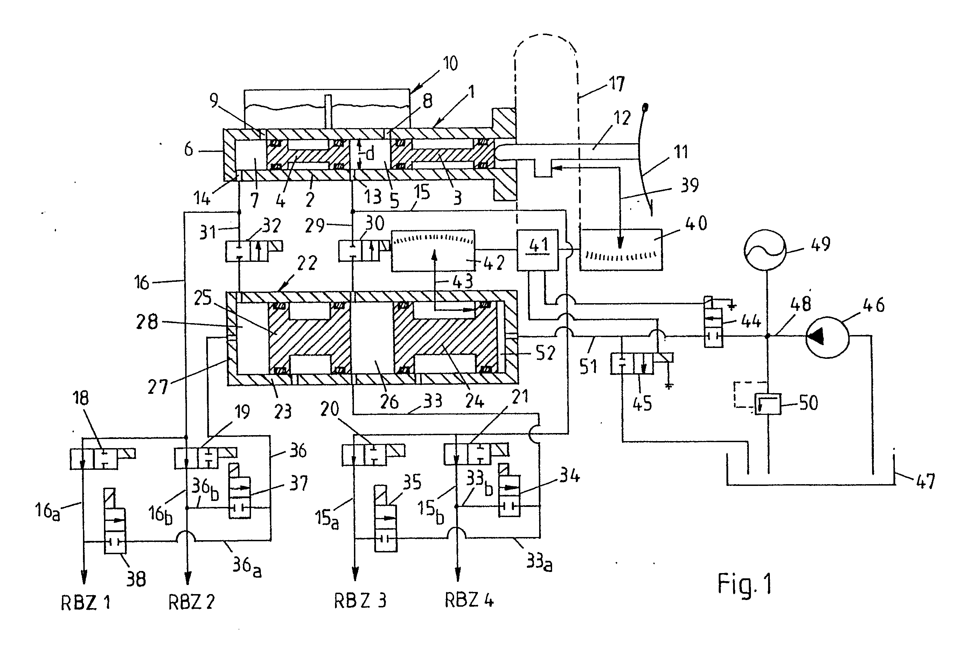

Gemäß Figur 1 weist eine erfindungsgemäße Bremsanlage einen Hauptbremszylinder 1 auf, in dessen Gehäuse 2 zwei Bremskolben 3 und 4 gleiten. Elemente der Verbindung zwischen beiden Bremskolben 3 und 4 sind der Übersichtlichkeit halber nicht näher dargestellt.

Zwischen Bremskolben 3 und 4 ist eine erste Bremskammer 5 und zwischen Bremskolben 4 und dem Boden 6 des Gehäuses eine zweite Bremskammer 7 ausgebildet. Sowohl Bremskammer 5 wie auch Bremskammer 7 besitzen je einen Einlaß 8 bzw. 9 für Bremsflüssigkeit aus einem entsprechenden Vorratsbehälter 10.

Werden die Bremskammern 5 bzw. 7 durch einen Bremsdruck auf ein Bremspedal 11 über eine Kolbenstange 12, welche stirnwärtig den Bremskolben 3 beaufschlagt, unter Druck gesetzt, so wird Bremsflüssigkeit aus den Bremskammern 5 bzw. 7 durch einen Auslaß 13 bzw. 14 in Bremsleitungen 15 bzw. 16 von zwei Bremskreisen eingeleitet. Dabei ist ggfs. noch zwischen dem Bremspedal 11 und dem Hauptbremszylinder 1 ein gestrichelt angedeuteter Bremskraftverstärker 17 eingeschaltet, welcher jedoch nicht unbedingt erforderlich ist. Wenn ein Bremskraftverstärker benutzt wird, so kann dies auch ein beispielsweise Vakuum-Bremskraftverstärker sein, welcher nur eine geringe Unterstützung der Bremskraft bewirkt. Selbstverständlich liegen im Rahmen der Erfindung aber auch andere Bremskraftverstärker mit anderen Energien.

Über die Bremsleitung 16 werden Radbremszylinder RBZ 1 und 2 mit Bremsflüssigkeit versorgt, wobei diese Radbremszylinder 1 und 2 der Übersichtlichkeit halber nicht näher dargestellt sind.

Ebenso übernimmt die Bremsleitung 15 die Versorgung von Radbremszylinder 3 und 4. Dabei sind in die entsprechenden Zweigleitungen 16a bzw. 16b und 15a bzw. 15b jeweils Magnetventile 18,19 und 20,21 eingeschaltet, welche im wesentlichen die Regelung der Bremsanlage in einem Antiblockierfall übernehmen. Tritt der Antiblockierfall auf, so schalten die Magnetventile 18,19,20 und 21 in Schließstellung, so daß keine weitere Bremsflüssigkeit aus den Bremskammern 5 und 7 zu den jeweiligen Radbremszylindern 1,2,3 und 4 gelangen können.

Erfindungsgemäß ist dem Hauptbremszylinder 1 ein Zusatzplunger 22 zugeordnet, welcher ein Gehäuse 23 aufweist. In diesem Gehäuse 23 gleiten zwei Zusatzkolben 24 und 25, welche etwa den Bremskolben 3 und 4 entsprechen. Auch sie bilden zwischen sich einen Druckraum 26 sowie der Zusatzkolben 25 zum Gehäuseboden 27 hin eine Druckkammer 28 aus.

Die Druckkammer 26 besitzt zum einen eine Verbindungsleitung 29 zur Bremsleitung 15, wobei in diese Verbindungsleitung 29 ein Magnetventil 30 eingeschaltet ist. Desgleichen verbindet eine Leitung 31 die Druckkammer 28 mit der Bremsleitung 16, wobei auch in diese Leitung 31 ein Magnetventil 32 eingeschaltet ist.

Ferner besitzt die Druckkammer 26 einen Anschluß an eine Rückführleitung 33 zur Bremsleitung 15, wobei sich diese Rückführleitung 33 ebenfalls in die Zweigleitungen 33a und 33b aufspaltet, in welche jeweils ein Magnetventil 34 und 35 eingesetzt ist.

Auch von der Druckkammer 28 führt eine Rückführleitung 36 zur Bremsleitung 16, wobei die Verbindung mit den Zweigleitungen 16a und 16b über entsprechende Zweigleitungen 36a und 36b erfolgt, in die ebenfalls Magnetventile 37 und 38 eingeschaltet sind.

Dieser Zusatzplunger hat vor allem die Aufgabe, bei normalem Bremsbetrieb die Bremswirkung in den Radbremszylindern 1,2,3 und 4 zu erhöhen. Hierbei wird gemäß dem Ausführungsbeispiel nach Figur 1 die Steuerung des Zusatzplungers 22 elektronisch durchgeführt. Erfolgt ein Bremsdruck auf das Bremspedal 11 und damit ein Verschieben der Kolbenstange 12, so wird dieses Verschieben über eine entsprechende Signalleitung 39 an einen Wegsensor 40 gemeldet. Dieser Wegsensor 40 steht mit einer Steuereinheit 41 in Verbindung, welche ein weiteres Signal von einem Wegsensor 42 erhält, welches über eine Leitung 43 den Weg des Zusatzkolbens 24 mißt. In der Steuereinheit 41 werden die beiden Wege bzw. die entsprechenden Signale verglichen und zwei weitere Magnetventile 44 und 45 angesteuert. Das Magnetventil 44 steht über eine Pumpe 46 mit einem Vorratsbehälter 47 für ein Druckmedium in Verbindung. In die Leitung 48 zwischen Pumpe 46 und Magnetventil 44 ist sowohl ein Speicher 49 als auch ein Druckausgleichsventil 50 eingeschaltet. Letzteres mündet ebenfalls in den Vorratsbehälter 47.

Beim Auftreten eines normalen Bremsfalles wird der Weg der Kolbenstange 12 über den Wegsensor an die Steuereinheit gegeben und von dieser ein Unterschied zum Signalwert des Wegsensors 42 festgestellt. Hierdurch erfolgt ein Umschalten des Magnetventiles 44 in geöffnete Stellung, so daß über die Pumpe 47 bzw. aus dem Speicher 49 Druckmedium über eine Speiseleitung 51 in einen Druckraum 52 vor dem Zusatzkolben 24 eingeleitet werden kann. Hierdurch erfolgt eine Druckerhöhung in den Druckkammern 26 und 28, so daß darin befindliches Druckmedium bzw. Bremsflüssigkeit über die Leitungen 29 bzw. 31 und die entsprechenden geöffneten Magnetventile 30,32 zu den Bremsleitungen 15,16 gelangen kann.

Dies geschieht zusätzlich zu der Bremsflüssigkeit aus den Bremskammern 5 und 7.

Im Falle des Auftretens eines Antiblockierfalles schalten die Magnetventile 18,19 bzw. 20,21 sowie 30,32 in Schließstellung um, so daß die Bremsleitungen 15 und 16 geschlossen sind. Dagegen öffnen aber die Magnetventile 34,35 und 37,38, so daß Bremsflüssigkeit über die Rückführleitungen 33 und 36 zu den jeweiligen Druckräumen 26 bzw. 28 aus den Radbremszylindern zurückgefördert wird. Da bei jeder Bremsung mit intakter Versorgung von Bremsflüssigkeit die Haupt-Volumenmenge an Bremsflüssigkeit aus dem Zusatzplunger 22 entnommen wird, erfolgt auch im Antiblockierfall die Entlastung über diesen Zusatzplunger 22, der wiederum ein Großteil der Bremsflüssigkeit aus den Radbremszylindern aufnimmt. Ein Zurückführen der Zusatzkolben 24 bzw. 25 erfolgt im wesentlichen durch ein Entlasten des Druckraumes 52, wobei das darin vorhandene Druckmedium über die Speiseleitung 51 und das Ventil 45 zurück in den Vorratsbehälter 47 gelangt.

Erfindungsgemäß sind ferner in der Druckabbauphase der Antiblockierregelung auch die Magnetventile 30 und 32 in geöffnete Stellung umgeschaltet, so daß Bremsflüssigkeit über die Verbindungsleitung 29 und die Leitung 31 zurück in die Bremskammern 5 und 7 geführt werden kann. Dies bewirkt eine Rückführung der Bremskolben 3 und 4 gegen die Kolbenstange 12 bzw. gegen einen möglichen, noch andauernden Bremsdruck auf das Bremspedal 11. Somit kann noch mehr Bremsflüssigkeitsvolumen aus den Radbremszylindern aufgenommen werden.

Eine Antriebsschlupfregelung erfolgt in einfacher Weise über die Magnetventile 30 und 32 durch Betätigung des Zusatzplungers 22. Ein Antriebsschlupf wird über entsprechende Radsensoren festgestellt und der Steuereinheit 41 gemeldet. Diese öffnet das Magnetventil 44, wobei die Pumpe 46 den Zusatzplunger 22 bzw. den Druckraum 52 mit Druckmedium füllt. Über die geöffneten Magnetventile 30 und 32 gelangt Bremsflüssigkeit aus den Druckkammern 26 und 28 in die Bremsleitungen 15 und 16.

Solange das Antiblockiersystem in Ordnung ist, darf die Hinterachse stärker abgebremst werden als die Vorderachse. Um diese variable Bremsenabstimmung zu erreichen, werden die Druckabbau-Magnetventile einer Achse als stromlos geschlossen ausgeführt. In diesem Fall ist ein Differenzdruckschalter erforderlich, um einen Kreisausfall erkennen und darauf reagieren zu können.

In den vorliegenden Ausführungsbeispielen ist ein Durchmesser d des Hauptbremszylinders so klein gewählt, daß bei einem Ausfall der Bremskraftunterstützung durch den Zusatzplunger 22 dennoch ein hoher Bremsdruck bei geringem Druck auf das Bremspedal 11 erreicht werden kann. In diesem Fall ist der Übersetzungssprung relativ gering.

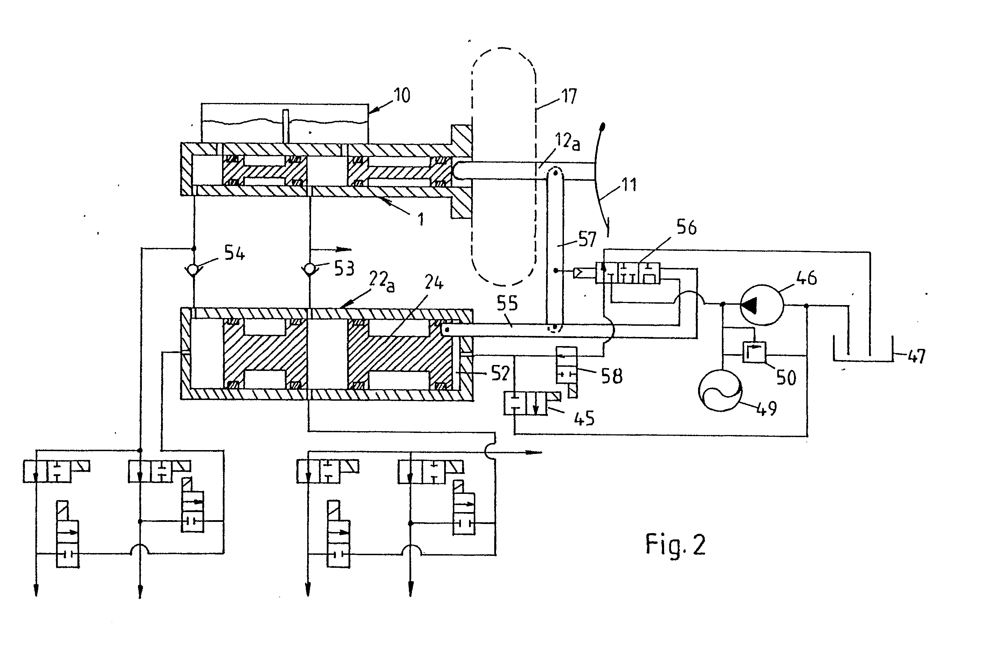

Sollt eine Antriebsschlupfregelung nicht erforderlich sein, hat es sich als ratsam erwiesen, die Magnetventile 30 und 32 durch entsprechende Rückschlagventile 53 und 54 zu ersetzen, wie dies insbesondere in Figur 2 dargestellt ist. Dort erfolgt die Steuerung des Zusatzplungers 22a im übrigen nicht auf elektronischem, sondern auf mechanischem Wege. Hierzu ist an den Zusatzkolben 24 eine Schubstange 55 angelenkt, die mechanisch ein Ventil 56 betätigt. Dieses Ventil 56 ist ferner an eine Verbindungsstange 57 angekoppelt, welche die Kolbenstange 12a mit der Schubstange 55 verbindet.

In der in Figur 2 gezeigten Stellung kann Druckmedium aus dem Druckraum 52 hinter den Zusatzkolben 24 über ein Magnetventil 58 und das geöffnete Ventil 56 in den Vorratsbehälter 47 zurückfließen. Wird das Ventil 56 in die mittlere Stellung verbracht, so bricht dieser Rückfluß zum Vorratsbehälter 47 ab. In der dritten Stellung des Ventils 56 schließlich wird der Druckraum 52 mit der Pumpe 46 oder ggfs. dem Speicher 49 verbunden, so daß wieder ein Druckaufbau über ein Druckmedium aus dem Vorratsbehälter 47 im Druckraum 52 stattfinden kann.

Die übrigen Elemente dieser Ausführungsform entsprechen denjenigen nach Figur 1.

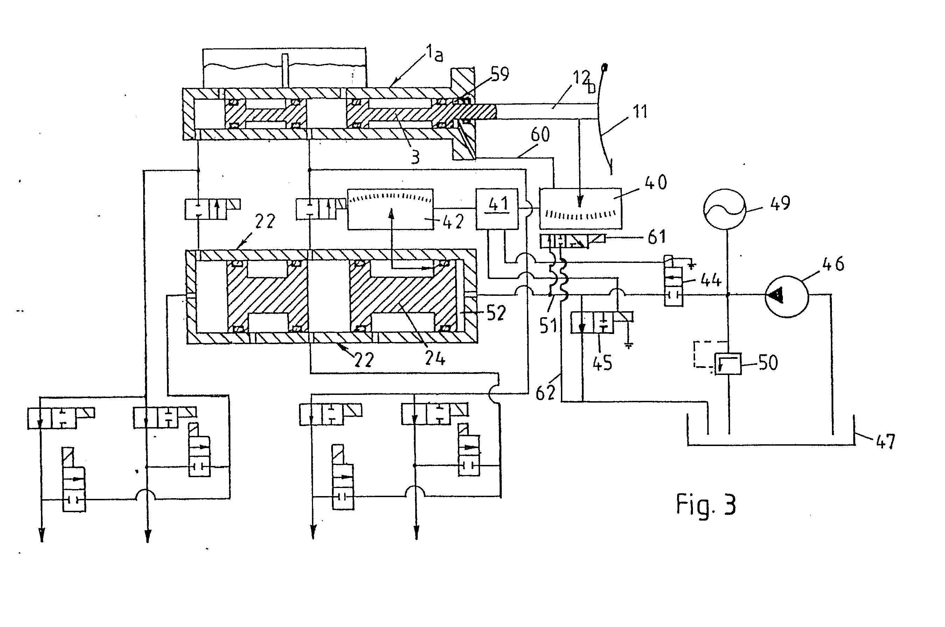

In Figur 3 ist ein Ausführungsbeispiel der Erfindung gezeigt, bei dem ein Bremskraftverstärker zwischen dem Bremspedal 11 und dem Hauptbremszylinder 1a völlig entfallen kann. Zu diesem Zweck sind ein Druckraum 59 hinter dem ersten Bremskolben 3 und der Druckraum 52 hinter dem Zusatzkolben 24 in dem Zusatzplunger 22 miteinander über eine Ausgleichsleitung 60 verbunden. In die Ausgleichsleitung 60 ist vor deren Anschluß an die Speiseleitung 51 ein Magnetventil 61 eingeschaltet, welches in der gezeigten Stellung die Füllung des Druckraumes 59 in gleichem Umfang gewährleistet wie die des Druckraumes 52.

Die zweite Stellung des Ventils ist eine Sperrstellung, während in der dritten Stellung des Ventils der Druckraum 59 über eine Leitung 62 in den Vorratsbehälter 47 entlastet werden kann. Dies gilt dann, wenn bei einer Antiblockierregelung mit Hilfe des Zusatzplungers 22 eine Rückführung der Bremskolben 3 und 4 im Hauptbremszylinder 1a erfolgt.

In der gezeigten Ausführungsform ist im übrigen die Kolbenstange 12b starr mit dem Bremskolben 3 verbunden. Die übrigen Elemente der Bremsanlage entsprechen denjenigen nach Figur 1.

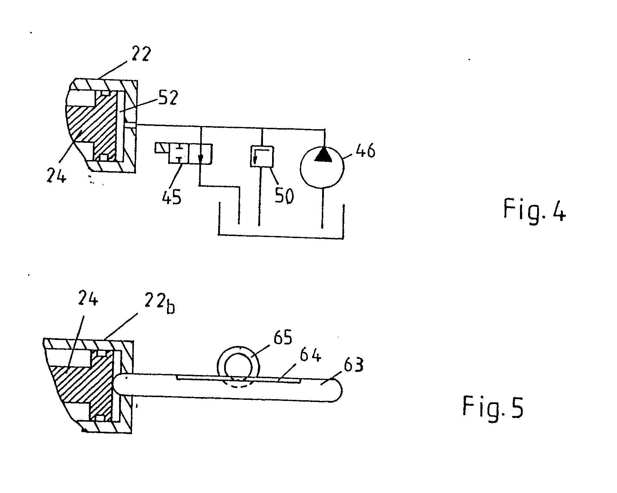

In Figur 4 soll der Ordnung halber noch dargestellt sein, daß sowohl ein zusätzlicher Speicher 49 als auch in Ausnahmefällen das Magnetventil 44 entfallen kann. Dies gilt dann, wenn als Pumpe die Tandempumpe der Lenkhilfe oder eine separate elektromotorisch angetriebene Pumpe 46 verwendet wird. Diese wird nur dann in Gang gesetzt, wenn der Druckraum 52 hinter dem Zusatzkolben 24 gefüllt werden soll.

Gemäß Figur 5 ist auch ein mechanischer Vorschub des Zusatzkolbens 24 in dem Zusatzplunger 22b denkbar. Hierbei wird der Zusatzkolben 24 von einer Zahnstange 63 beaufschlagt, deren Zahnung 64 von einem beispielsweise elektromotorisch angetriebenen Zahnrad 65 gekämmt wird. Die Steuerung des Elektromotors für das Zahnrad 65 übernimmt beispielsweise die bereits zu Figur 1 erwähnte Steuereinheit 41.

## Ansprüche

1. Bremsanlage mit einem Hauptbremszylinder, in dem zumindest ein von einer Kolbenstange mit Bremsdruck beaufschlagbarer Bremskolben eine Bremskammer ausbildet, aus welcher eine Bremsleitung zu Radbremszylindern führt, wobei in die Bremsleitung zumindest ein Ventil zum Sperren der Bremsleitung bei einer Antiblockierregelung eingeschaltet und mit der Bremsleitung zumindest eine von einem Zusatzkolben gebildete Druckkammer eines Zusatzplungers zum Einspeisen von Bremsflüssigkeit über eine Leitung verbunden ist, dadurch gekennzeichnet, daß von der Bremsleitung (15,16) vor dem Ventil (18,19,20,21) eine Rückführleitung (33,36) für die Bremsflüssigkeit bei einer Antiblockierregelung zu der Druckkammer (26,28) des Zusatzplungers (22) führt.

2. Bremsanlage nach Anspruch 1, dadurch gekennzeichnet, daß in die Rückführleitung (33,36) ein Ventil (34,35,37,38), insbesondere ein 2/2-Wegeventil, eingeschaltet ist.

3. Bremsanlage nach Anspruch 1 oder 2, dadurch gekennzeichnet, daß in die Leitung (29,31) zum Einspeisen von Bremsflüssigkeit aus der Druckkammer (26,28) in die Bremsleitung (15,16) ein Rückschlagventil eingeschaltet ist.

4. Bremsanlage nach Anspruch 1 oder 2, dadurch gekenn zeichnet, daß in die Leitung (29,31) zum Regeln eines Antriebsschlupfes und zum Einspeisen von Bremsflüssigkeit aus der Druckkammer (26,28) ein Ventil (30,32), insbesondere ein 2/2-Wegeventil, eingeschaltet ist.

5. Bremsanlage nach wenigstens einem der Ansprüche 1 bis 4, dadurch gekennzeichnet, daß der Zusatzkolben (24) mechanisch von einer Stange od. dgl. unter Druck gesetzt ist.

6. Bremsanlage nach Anspruch 5, dadurch gekennzeichnet, daß die Stange als Zahnstange (63) ausgebildet ist, in deren Zahnung (64) ein vorzugsweise elektromotorisch angetriebenes Zahnrad (65) eingreift.

7. Bremsanlage nach wenigstens einem der Ansprüche 1 bis 6, dadurch gekennzeichnet, daß vor dem Zusatzkolben (24) des Zusatzplungers (22) ein Druckraum (52) vorgesehen ist, in den über eine Speiseleitung (51) mittels einer Pumpe (46) Druckmedium einfüllbar ist.

8. Bremsanlage nach Anspruch 7, dadurch gekennzeichnet, daß zwischen Pumpe (46) und Druckraum (52) ein Ventil (44), insbesondere ein 2/2-Wegeventil, in die Speiseleitung (51) eingeschaltet ist.

9. Bremsanlage nach Anspruch 7 oder 8, dadurch gekennzeichnet, daß von der Speiseleitung (51) eine Rücklaufleitung über ein Ventil (45) in einen Vorratsbehälter (47) od. dgl. abzweigt.

10. Bremsanlage nach Anspruch 8 oder 9, dadurch gekennzeichnet, daß in eine Leitung (48) zwischen dem Ventil (44) und der Pumpe (46) ein Speicher (49) einmündet und diese Leitung (48) über ein Druckbegrenzungsventil (50) mit dem Vorratsbehälter (47) in Verbindung steht.

11. Bremsanlage nach wenigstens einem der Ansprüche 5 bis 10, dadurch gekennzeichnet, daß die Steuerung des Antriebes der Stange (63) oder der Pumpe (46) bzw. der Ventile (44,45) über eine Steuereinheit (41) elektronisch erfolgt, welche die Werte eines der Kolbenstange (12) und eines dem Zusatzkolben (24) zugeordneten Wegsensors (40,42) vergleicht.

12. Bremsanlage nach wenigstens einem der Ansprüche 7 bis 10, dadurch gekennzeichnet, daß die Steuerung des von der Pumpe (46) bzw. dem Speicher (49) dem Druckraum (52) zugeführten Druckmediums über ein Ventil (56), insbesondere ein 3/3-Wegeventil, mechanisch erfolgt.

13. Bremsanlage nach Anspruch 12, dadurch gekennzeichnet, daß eine an den Zusatzkolben (24) angekoppelte Schubstange (55) über eine Verbindungsstange (57) mit der Kolbenstange (12a) verbunden ist und eine mechanische Betätigung des Ventils (56) bewirkt.

14. Bremsanlage nach wenigstens einem der Ansprüche 7 bis 13, dadurch gekennzeichnet, daß der Druckraum (52) eine Verbindung über eine Ausgleichsleitung (60) mit einem Druckraum (59) vor dem Bremskolben (3) im Hauptbremszylinder (1a) besitzt.

15. Bremsanlage nach Anspruch 14, dadurch gekennzeichnet, daß in die Ausgleichsleitung (60) ein Ventil (61), insbesondere ein 3/3-Wegeventil, eingeschaltet ist.

Fig.1

Fig. 2

EP 0 422 457 A1

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C-3812830 (DAIMLER-BENZ) <br> * das ganze Dokument * | 1, 2, 4 | B60T8/32 |
| A | FR-A-2574355 (BOSCH) <br> * Zusammenfassung; Figur 1 * | 1 | |
| A | FR-A-2578500 (BOSCH) <br> * Zusammenfassung * <br> * Seite 5, Zeilen 19 - 20; Figur 1 * | 1, 11 | |
| A | EP-A-0292648 (TEVES) <br> * Spalte 8, Zeilen 32 - 36; Figur 1 * | 5, 6 | |
| A | DE-C-3812831 (DAIMLER-BENZ) <br> * das ganze Dokument * | 7-10 | |
| A,P | DE-A-3814404 (TEVES) <br> * Zusammenfassung; Figur 1 * | 1 | |

**RECHERCHIERTE SACHGEBIETE (Int. Cl.5)**

B60T

Der vorliegende Recherchenbericht wurde für alle Patentansprüche erstellt

| Recherchenort | Abschlußdatum der Recherche | Prüfer |
|---|---|---|
| BERLIN | 03 JANUAR 1991 | BLURTON M. D. |